(19) Europäisches Patentamt
European Patent Office
Office européen des brevets

(11) **EP 3 475 074 B1**

(12) **EUROPÄISCHE PATENTSCHRIFT**

(45) Veröffentlichungstag und Bekanntmachung des Hinweises auf die Patenterteilung:
**10.06.2020   Patentblatt 2020/24**

(51) Int Cl.:
***B31F 1/28*** *(2006.01)*   ***B65G 39/07*** *(2006.01)*

(21) Anmeldenummer: **16740959.8**

(22) Anmeldetag: **27.06.2016**

(86) Internationale Anmeldenummer:
**PCT/DE2016/100291**

(87) Internationale Veröffentlichungsnummer:
**WO 2018/001395 (04.01.2018 Gazette 2018/01)**

(54) **SELBSTSPANNENDER TROMMELBELAG FÜR EINE ANTRIEBSTROMMEL IN EINER WELLPAPPENMASCHINE**

SELF-TENSIONING DRUM COVER FOR A DRIVE DRUM IN A CORRUGATED BOARD MACHINE

GARNITURE DE TAMBOUR À SERRAGE AUTOMATIQUE POUR UN TAMBOUR D'ENTRAÎNEMENT DANS UNE MACHINE À CONFECTIONNER LE CARTON ONDULÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.05.2019   Patentblatt 2019/18**

(73) Patentinhaber: **Mühlen Sohn GmbH & Co. KG**
**89134 Blaustein (DE)**

(72) Erfinder: **KOKOSCHKA, Erwin**
**89134 Blaustein (DE)**

(74) Vertreter: **Jakelski & Althoff**
**Patentanwälte PartG mbB**
**Patentanwälte**
**Partnerschaftsgesellschaft**
**Mollenbachstraße 37**
**71229 Leonberg (DE)**

(56) Entgegenhaltungen:
**AT-B- 349 984**

**Beschreibung**

Die vorliegende Erfindung betrifft einen selbstspannenden Trommelbelag für eine Antriebstrommel in einer Wellpappenmaschine. Weiterhin betrifft die vorliegende Erfindung Sets zur Herstellung des Trommelbelags. Außerdem betrifft die vorliegende Erfindung eine Antriebstrommel, welche den Trommelbelag aufweist sowie ein Verfahren zur Herstellung des Trommelbelags. Schließlich betrifft die vorliegende Erfindung eine Wellpappenmaschine, welche mindestens eine derartige Antriebstrommel enthält.

Stand der Technik

Wellpappenmaschinen weisen Obergurte und Untergurte auf, welche die Wellpappe durch die Wellpappenmaschine transportieren. Eine Wellpappenmaschine ist beispielsweise aus der US 2,039,750 bekannt. Antriebstrommeln dienen der Kraftübertragung auf die Ober- und Untergurte. Weiterhin offenbart Patentdokument AT 349 984 B einen Trommelbelag für eine Antriebstrommel in einer Wellpappenmaschine.

Um eine optimale Kraftübertragung von einer Antriebstrommel zum Gurt zu gewährleisten, sind die Antriebstrommeln, die auch als Antriebswalzen bezeichnet werden, mit einem Belag versehen. Daraus resultiert ein minimaler Gurtschlupf, um die Kraftübertrag zu optimieren und den Verschleiß der Gurte zu minimieren. Dies erhöht die Wirtschaftlichkeit der Wellpappenmaschine. Trommelbeläge besitzen eine Haltbarkeit von drei bis fünf Jahren und werden üblicherweise fest auf den Antriebstrommeln verklebt. Zum Austausch der Beläge werden die Antriebstrommeln innerhalb der Produktionslinie der Wellpappenmaschine bearbeitet und belegt. Während dieser zeitaufwendigen Arbeiten muss die Wellpappenmaschine außer Betrieb genommen werden. Beim Austausch der Beläge treten außerdem zum Teil erhebliche Verletzungsrisiken durch mechanische Arbeiten oder auch gesundheitliche Risiken durch die Verwendung von lösungsmittelhaltigen Klebern auf.

Alternativ können auch gummierte Antriebstrommeln verwendet werden. Nachdem die Gummierung verschließen ist, muss allerdings die gesamte Trommel ausgetauscht werden.

Eine Aufgabe der vorliegenden Erfindung besteht deshalb darin, einen Trommelbelag bereitzustellen, der schnell und mit geringem Gefahrenpotenzial auf die Antriebstrommel einer Wellpappenmaschine aufgebracht und wieder von dieser entfernt werden kann. Weitere Aufgabe der Erfindung bestehen darin, Sets bereitzustellen, aus denen der Trommelbelag am Standort der Wellpappenmaschine hergestellt werden kann, eine mit dem Trommelbelag belegte Antriebstrommel sowie ein Verfahren zu deren Herstellung bereitzustellen, und schließlich eine Wellpappenmaschine bereitzustellen, welche eine derartige Antriebstrommel aufweist.

Offenbarung der Erfindung

Diese Aufgabe wird in einem Aspekt der Erfindung durch einen Trommelbelag für eine Antriebstrommel in einer Wellpappenmaschine gelöst, der ein bei Erwärmung reversibel schrumpfendes textiles Trägermaterial aufweist, das auf wenigstens einer Seite mit einem Beschichtungsmaterial beschichtet ist. Der Trommelbelag weist zwei rechteckige Bereiche auf, die jeweils an einer Schmalseite mit einem konvex deltoidförmigen Bereich verbunden sind.

Der Trommelbelag weist insbesondere auf keiner Seite eine Klebstoffschicht auf.

Der konvex deltoidförmige Bereich des Trommelbelags sorgt dafür, dass die rechteckigen Bereiche des Trommelbelags einen Winkel von mehr als 0° und von weniger als 90° miteinander bilden. Ein konvexes Deltoid wird auch als Drachenviereck bezeichnet und besitzt zwei Paar gleichlanger benachbarter Seiten. Eine Diagonale des konvexen Deltoids bildet zugleich seine Symmetrieachse.

Als reversibel schrumpfendes textiles Trägermaterial können grundsätzlich verschiedenste Textilien, wie beispielsweise Gewebe, Gewirke, Gestricke, Gelege, Geflechte oder auch Filze verwendet werden. Dabei sind mehrlagige Gewebe, insbesondere zweilagige oder dreilagige Gewebe bevorzugt. Das textile Trägermaterial kann grundsätzlich synthetische und/oder natürliche Fasermaterialien enthalten. Polyester und/oder Viskose sind bevorzugt, um die thermischen Schrumpfungseigenschaften zu erhalten. Dabei ist es weiterhin bevorzugt, dass das textile Trägermaterial mindestens zwei unterschiedliche Fasermaterialien enthält.

Das Beschichtungsmaterial erfüllt zwei Funktionen. Zum einen verhindert es ein Abrutschen eines Obergurts oder Untergurts von einer Antriebstrommel, die mit dem Trommelbelag belegt ist. Zum anderen gewährleistet es eine optimale Kraftübertragung auf den Obergurt bzw. Untergurt einer Wellpappenmaschine. Grundsätzlich muss das Beschichtungsmaterial nicht über ein thermisches Schrumpfungsverhalten verfügen. In diesem Fall wird es durch das thermische Schrumpfungsverhalten des textilen Trägermaterials bei Temperaturerhöhung komprimiert. Dies führt zu einem thermischen Schrumpfen des gesamten Trommelbelags. Bei prozessbedingter Temperaturerhöhung in einer Wellpappenmaschine erfährt der Trommelbelag einen Schrumpf, der einer altersbedingten mechanischen Längung des Trommelbelags entgegenwirkt. Die temperaturbedingte Schrumpfung des Trommelbelags spannt den Trommelbelag. Bei Abkühlung des Trommelbelags kehrt dieser durch das reversible Schrumpfungsverhalten in seine Ursprungsform zurück. Dies ermöglicht ein einfaches Entfernen des Trommelbelags von der Antriebstrommel.

Bevorzugt schrumpft allerdings auch das Beschichtungsmaterial bei Temperaturerhöhung reversibel. Auf diese Weise kann ein besonders ausgeprägtes thermisches Schrumpfungsverhalten des gesamten Trommelbelags erreicht werden.

Um ein Abrutschen des Obergurts oder des Untergurts von der Antriebstrommel zu verhindern und eine optimale Kraftübertragung zu gewährleisten, genügt es grundsätzlich, wenn das textile Trägermaterial auf einer Seite mit dem Beschichtungsmaterial beschichtet ist und diese Seite dem Gurt zugewandt wird. Es ist jedoch bevorzugt, dass das textile Trägermaterial auf beiden Seiten mit einem Beschichtungsmaterial beschichtet ist. Dies führt zum einen zu einem gleichmäßigeren Schrumpfverhalten des Trommelbelags. Zum anderen verhindert die zweite Beschichtung, welche der Antriebstrommel zugewandt werden kann, zuverlässig ein Verrutschen des Trommelbelags auf der Antriebstrommel.

In einer bevorzugten Ausführungsform des Trommelbelages sind auf den beiden Seiten des textilen Trägermaterials unterschiedliche Beschichtungsmaterialien aufgebracht. Dabei wird insbesondere auf der Seite des Trommelbelages, welche einem Gurt zugewandt werden soll ein Beschichtungsmaterial mit einem höheren Reibungskoeffizienten und einer höheren Abriebfestigkeit angeordnet, als auf der Seite, welche einer Antriebstrommel zugewandt werden soll. Hiermit können die Beschichtungsmaterialien an die unterschiedlichen Anforderungen an die Trommeibeiagsseiten angepasst werden.

Das reversibel schrumpfende textile Trägermaterial und/oder das gegebenenfalls reversibel schrumpfende Beschichtungsmaterial schrumpfen bei einer Erwärmung um mindestens 80°C vorzugsweise um mindestens 0,01 % in Längsrichtung. Hierdurch kann bei typischen Temperaturerhöhungen, wie sie in einer Wellpappenmaschine im Betrieb gegenüber der Umgebungstemperatur auftreten, eine so starke Schrumpfung des Trommelbelags erzielt werden, dass dieser sicher auf eine Antriebstrommel gespannt werden kann. Der Schrumpf des gesamten Trömmelbelags bei einer Erwärmung um mindestens 80°C beträgt ebenfalls vorzugsweise mindestens 0,01 % in Längsrichtung.

Das Beschichtungsmaterial ist vorzugsweise aus der Gruppe ausgewählt, die aus Kautschuken, Silikonen, Polyurethanen und Gemischen daraus besteht. Silikone, wie insbesondere Polydimethylsiloxan sind als Beschichtungsmaterial besonders bevorzugt. Ganz besonders bevorzugt sind quervernetzte Polydimethylsiloxane. Ausgewählte Vertreter dieser Stoffkfassen weisen ein gutes reversibles thermisches Schrumpfverhalten in Kombination mit einer hohen Abriebfestigkeit und einem hohen Reibungskoeffizienten auf, welcher ein Abrutschen eines Obergurts oder Untergurts auf dem Trommelbelag verhindert.

Die Kombination aus dem textilen Trägermaterial und dem Beschichtungsmaterial wird vorzugsweise so gewählt, dass der Trommelbelag einen Shorehärtegrad A von mehr als 50 aufweist. Dieser kann gemäß der Norm DIN ISO 7619-1 ermittelt werden. Eine so große Härte verleiht dem Trommelbelag eine lange Lebensdauer bei der Verwendung in einer Wellpappenmaschine, so dass ein Austauschen des Trommelbelags. für welches die Wellpappenmaschine stillgelegt werden muss, nur selten erforderlich ist.

Um ein einfaches Aufbringen des Trommelbelags auf eine Antriebstrommel zu ermöglichen, beträgt dessen Dicke bevorzugt maximal 15 mm, besonders bevorzugt maximal 10 mm. Um dennoch eine hinreichende Verschleißfestigkeit des Trommelbelags zu gewährleisten, liegt die Dicke des textilen Trägermaterials bevorzugt im Bereich von 1 mm bis 9 mm, besonders bevorzugt im Bereich von 4 mm bis 7 mm. Die Beschichtung des textilen Trägermaterials, welche für eine gurtseitige Anordnung vorgesehen ist, hat eine Dicke, die bevorzugt im Bereich von 0,1 mm bis 3 mm, besonders bevorzugt im Bereich von 0,5 mm bis 1,5 mm liegt. Außerdem liegt die Breite der rechteckigen Bereich bevorzugt im Bereich von 5 cm bis 80 cm, besonders bevorzugt im Bereich von 10 cm bis 20 cm, um bei handelsüblichen Antriebstrommeldurchmessern eine gute Bedeckung der Trommeloberfläche zu erreichen.

In einem weiteren Aspekt betrifft die Erfindung ein Set zur Herstellung des erfindungsgemäßen Trommelbelags. In einer Ausführungsform dieses Sets umfasst es zwei rechteckige Belagsstücke und ein konvex deltoides Belagsstück. Alle Belagsstücke weisen ein bei Erwärmung reversibel schrumpfendes textiles Trägermaterial auf, das auf wenigstens einer Seite mit einem Beschichtungsmaterial beschichtet ist. Die Belagsstücke können beispielsweise mittels Klammerung miteinander verbunden werden, um den Trommelbelag zu erhalten. Dabei bilden die rechteckigen Belagsstücke die rechteckigen Bereiche des Trommelbelags und das konvex deltoidförmige Belagsstück bildet den konvex deltoidförmigen Bereich des Trommelbelags. Ein solches Set hat den Vorteil, dass es einfach zu transportieren ist, indem die rechteckigen Belagsstücke aufgerollt werden können, was bei dem fertigen Trommelbelag aufgrund der gewinkelten Positionierung der rechteckigen Bereiche nicht ohne Weiteres möglich wäre. Die Belagsstücke des Sets können beim Ausrüsten einer Antriebstrommel einer Wellpappenmaschine unmittelbar vor Belegen der Antriebstrommel mit dem Trommelbelag vor Ort zu dem Trommelbelag zusammengesetzt werden.

In einer anderen Ausführungsform des Sets umfasst dieses anstelle des konvex deltoidförmigen Belagsstücks mehrere dreieckige Belagsstücke, insbesondere zwei rechtwinklig dreieckige Belagsstücke. Die beiden rechtwinklig dreieckigen Belagsstücke können den konvex deltoidförmigen Bereich des Trommelbelags bilden, indem sie an ihren Hypotenusen zusammengefügt werden. Während es notwendig ist, das konvex deltoidförmige Belagsstück oder die rechtwinklig dreieckigen Belagsstücke jeweils fest mit den rechteckigen Belagsstücken zu verbinden, um den Trommelbelag zu erhalten, genügt es, die beiden rechtwinklig dreieckigen Belagsstücke ohne feste Verbindung zueinander auf der Oberfläche einer Antriebstrommel aneinander zu fügen, ohne sie untereinander zu verbinden. Eine anschließende Befestigung der rechtwinklig dreieckigen Belagsstücke auf der Oberfläche der Antriebstrommel fixiert diese dauerhaft in der konvexen Deltoidform, weiche zur Bildung des Trommelbelags erforderlich ist. Diese Ausführungsform des Sets ermöglicht ein noch platzsparenderes Verstauen der Belagsstücke. Insbesondere ist es möglich bereits im Set jeweils ein rechtwinklig dreieckiges Belagsstück mit einem dazugehörigen rechteckigen Belagsstück verbunden auszuliefern, ohne dass die Aufrollbarkeit der auf diese Weise verbundenen Belagsstücke dabei beeinträchtigt würde. Diese Verbindung kann auch so erfolgen, dass das rechtwinklig dreieckige Belagsstück mit dem dazugehörigen rechteckigen Belagsstück einstückig ausgebildet ist.

In noch einem weiteren Aspekt betrifft die Erfindung eine Antriebstrommel. Diese weist einen Trommelbelag auf, der ein bei Erwärmung reversibel schrumpfendes textiles Trägermaterial aufweist, das auf wenigstens einer Seite mit einem Beschichtungsmaterial beschichtet ist. Zwei rechteckige Bereiche des Trommelbelags sind spiralförmig um die Antriebstrommel gewickelt und mit Befestigungselementen an der Antriebstrommeloberfläche befestigt. Jeweils ein Ende jedes rechteckigen Bereichs des Trommelbelags grenzt dabei an eine Seite eines in der Mitte der Antriebstrommeloberfläche angeordneten konvex deltoidförmigen Positionierbereichs der Antriebstrommel an. Unter Angrenzen wird dabei verstanden, dass eine Schmalseite des jeweiligen rechteckigen Bereichs auf einer Seite des deltoidförmigen Positionierbereichs liegt. Der Positionierbereich kann von weiteren Bereichen des Trommelbelags belegt sein. Er kann aber auch frei bleiben und nur die Positionierung der rechteckigen Bereiche zueinander definieren.

Insbesondere durch Belegen einer herkömmlichen Antriebstrommel mit einem Trommelbelag gemäß der Erfindung kann eine erfindungsgemäße Antriebstrommel erhalten werden. Bei dieser Antriebstrommel ist der konvex deltoidförmige Bereich des Trommelbelags in der Mitte der Antriebstrommeloberfläche mittels mindestens eines Befestigungselements an der Antriebstrommel befestigt. Erliegt also in dem deltoidförmigen Positionierbereich. Die rechteckigen Bereiche des Trommelbelags sind spiralförmig um die Antriebstrommel gewickelt und an ihren Enden jeweils mit mindestens einem weiteren Befestigungselement an der Antriebstrommeloberfläche befestigt. Indem der konvex deltoidförmige Bereich exakt in der Mitte der Antriebstrommeloberfläche angeordnet ist, erfolgt eine symmetrische Anordnung der rechteckigen Bereiche des Trommelbelags. so dass beim Verwenden der Antriebstrommel in einer Wellpappenmaschine keine unerwünschten Führungskräfte entstehen. Ausgehend von der Trommelmitte bilden die rechteckigen Bereiche des Trommelbelags. dort wo ihre Windungen nebeneinander liegen, eine spiralförmige Rille mit einer Links- bzw. Rechtssteigung. Hierdurch lokal entstehende Führungskräfte gleichen sich durch die Symmetrie über die gesamte Antriebstrommel aus. Die erfindungsgemäße Befestigung des Trommelbelags auf der Antriebstrommel ermöglicht es vollständig auf ein Verkleben des Trommelbelags zu verzichten. Wenn der Trommelbelag aufgrund von Verschleiß ausgetauscht werden muss, so genügt es also die Befestigungselemente an den Enden der rechteckigen Bereiche sowie im konvex deltoidförmigen Bereich zu entfernen, damit der Trommelbelag anschließend einfach von der Antriebstrommel abgewickelt werden kann.

Ein von den beiden längsten Seiten des konvex deltoidförmigen Bereichs des Trommelbelags eingeschlossener Winkel $\alpha$ ergibt sich gemäß Formel 1:

$$\alpha = 2 \cdot \arcsin \frac{b}{U} \qquad \text{(Formel 1)}$$

Dabei gibt b die Breite der rechteckigen Bereiche des Trommelbelags an. U ist der Umfang der Antriebstrommel. Dieser Winkel $\alpha$ gewährleistet eine kleinstmögliche Rille zwischen den Wicklungen der rechteckigen Bereiche des Trommelbelags. In Abhängigkeit vom Umfang der Antriebstrommel, weiche mit dem Trommelbelag belegt werden soll, wird also vorzugsweise gemäß Formel 1 ein von der Breite der rechteckigen Bereiche abhängiger Winkel $\alpha$ des konvex deltoidförmigen Bereichs gewählt. Wenn der konvex deltoidförmige Bereich aus zwei rechtwinklig dreieckigen Belagsstücken zusammengesetzt werden soll, so weisen diese jeweils vorzugsweise einen Winkel zwischen ihren beiden längsten Seiten auf, welcher der Hälfte des Winkels $\alpha$ entspricht.

Der Trommelbelag ist vorzugsweise mit einer Vorspannkraft im Bereich von 1 kg bis 10 kg, besonders vorzugsweise im Bereich von 3 kg bis 7 kg, vorgespannt. Hierdurch wird einerseits sichergestellt, dass bereits bei Raumtemperatur, also vor Inbetriebnahme der Wellpappenmaschine. eine ausreichende Spannung des Trommelbelags vorliegt, um dessen Verrutschen auf der Oberfläche der Antriebstrommel zu verhindern. Andererseits ist die Vorspannkraft niedrig genug, damit durch die thermische Schrumpfung des Trommelbelags keine übermäßige mechanische Belastung des Trommelbelags erfolgt.

Das mindestens eine Befestigungselement, weiches den konvex deltoidförmigen Bereich des Trommelbelags an der Antriebstrommel befestigt, ist bevorzugt ein Fixierniet der in einem durch den konvex deltoidförmigen Bereich durchgehenden Langloch angeordnet ist. Insbesondere wird zwischen dem Nietkopf und der Antriebstrommeloberfläche eine Abstandshülse eingebracht. Dies ermöglicht eine Beweglichkeit des Befestigungselements bei der thermischen Schrumpfung des Trommelbelags. Wenn der konvex deltoidförmige Bereich aus zwei rechtwinklig dreieckigen Belagsstücken zusammengesetzt ist, so weist jedes dieser Belagsstücke ein separates Langloch mit einem eigenen Fixierniet auf. Für eine besonders sichere Befestigung des konvex deltoidförmigen Bereichs können auch mehrere Langlöcher vorgesehen sein, deren einzelne Längsachsen jeweils auf einer gemeinsamen Längsachse liegen.

Dieselben Fixierniete, die zum Befestigen des konvex deltoidförmigen Bereichs vorgesehen sind, können auch zur Befestigung der Enden der rechteckigen Bereiche verwendet werden. Dort werden sie jedoch vorzugsweise nicht durch Langlöcher, sondern durch kreisrunde Löcher in den rechteckigen Bereichen geführt, so dass an den Enden der rechteckigen Bereiche keine Beweglichkeit der Fixierniete vorhanden ist. Deshalb kann in den kreisrunden Löchern auch auf Abstandshülsen verzichtet werden.

Um die Fixierniete in die Oberfläche der Antriebstrommel einzubringen, ist es erforderlich, dass diese Bohrungen aufweist. Diese Bohrungen können beim Aufbringen des Trommelbelags auf die Antriebstrommel vor Ort in die Antriebstrommeloberfläche eingebracht werden.

Ein Verfahren zur Herstellung der Antriebstrommel umfasst die folgenden Schritte:

- Anordnen des konvex deltoidförmigen Bereichs eines Trommelbelags an einer Antriebstrommel, wobei die Mittelachse des konvex deltoidförmigen Bereichs entlang der Umfangsmittelachse der Antriebstrommel angeordnet wird,
- Befestigen des konvex deltoidförmigen Bereichs des Trommelbelags an der Antriebstrommeloberfläche mittels mindestens eines Befestigungselements,
- Drehen der Antriebstrommel, wobei die rechteckigen Bereiche des Trommelbelags spiralförmig um die Antriebstrommel gewickelt werden,
- Abschneiden der rechteckigen Bereiche an den Enden der Antriebstrommel, und
- Befestigen der Enden der rechteckigen Bereiche an der Antriebstrommeloberfläche mittels weiterer Befestigungselemente.

Unter der Mittelachse des konvex deltoidförmigen Bereichs wird dabei seine längste Diagonale verstanden. Unter der Umfangsmittelachse der Antriebstrommel wird jene Linie verstanden, die orthogonal auf der Längsachse der Antriebstrommel steht und die gleich weit von den beiden Enden der Antriebstrommel angeordnet ist. Sie verläuft auf der Mantelfläche der Antriebstrommel, Das Drehen der Antriebstrommel kann in ihrer Befestigung in einer Wellpappenmaschine erfolgen, so dass ein Ausbauen und anschließendes Wiedereinbauen der Antriebstrommel in die Wellpappenmaschine nicht notwendig ist.

Während es für die Auswahl eines Trommelbelags mit dem idealen Winkel $\alpha$ des konvex deltoidfärmigen Bereichs notwendig ist, im Vorhinein den Umfang der Antriebstrommel zu kennen, so ist eine Kenntnis ihrer Länge hingegen nicht notwendig. Wenn die rechteckigen Bereiche des Trommelbelags hinreichend lang ausgeführt sind, so kann mit ihnen eine Trommel jeder üblichen Länge belegt werden. Die überstehenden Enden der rechteckigen Bereiche werden abgeschnitten, so dass sich am Ende der rechteckigen Bereiche abgeschrägte Abschnitte bilden, die an der Antriebstrommel befestigt werden können.

Wenn der konvex deltoidförmige Bereich aus zwei rechtwinklig dreieckigen Bereichen zusammengesetzt wird, so kann dies auf der Oberfläche der Antriebstrommel erfolgen. Jeder rechtwinklig dreieckige Bereich wird dabei mit mindestens einem Befestigungselement an der Antriebstrommeloberfläche befestigt. Zum Zweck der Ausrichtung der rechtwinklig dreieckigen Bereiche auf der Antriebstrommeloberfläche wird unter der Mittelachse des konvex deltoidförmigen Bereichs die Mittelachse des aus den rechtwinklig dreieckigen Bereichen zu bildenden konvex deltoidförmigen Bereichs verstanden. Sie entspricht also jeweils der längsten Kathete eines rechtwinkligen Dreiecks. Wenn die rechteckigen Bereiche nicht bereits mit dem konvex deltoidförmigen Bereich verbunden sind, so können sie während der Herstellung der erfindungsgemäßen Antriebstrommel mit diesem verbunden werden. Dies kann wahlweise vor dem Befestigen des konvex deltoidförmigen Bereichs bzw. seiner beiden rechtwinklig dreieckigen Bestandteile auf der Antriebstrommeloberfläche oder erst danach erfolgen.

In einem weiteren Aspekt betrifft die Erfindung eine Wellpappenmaschine. welche die erfindungsgemäße Antriebstrommel aufweist. In dieser Wellpappenmaschine ist die Antriebstrommel so angeordnet, dass die rechteckigen Bereiche des Trommelbelags im Betrieb der Wellpappenmaschine entgegen der Drehrichtung der Antriebstrommel um die Antriebstrommel gewickelt sind. Dabei treten bei der Wellpappenproduktion Spannungskräfte vom Rand der Antriebstrommel in Richtung zur Trommelmitte auf. Der selbstspannende Effekt des Trommelbelags ist somit nicht ausschließlich auf seine thermische Schrumpfung beschränkt. Vielmehr wirken die Rotation der Antriebstrommel und das gleichzeitige Andrücken des Trommelbelags durch den Obergurt oder den Untergurt auf die Antriebstrommel zusammen. Der Druck des Gurts wird durch die Gurtspannung geregelt.

Kurze Beschreibung der Zeichnungen

Ausführungsbeispiele der Erfindung sind in den Zeichnungen dargestellt und werden in der nachfolgenden Beschreibung näher erläutert.

Fig. 1    zeigt eine schematische Seitenansicht einer Wellpappenmaschine gemäß einem Ausführungsbeispiel der Erfindung.

Fig. 2    zeigt einen Längsschnitt eines textilen Trägermaterials eines Ausführungsbeispiels des erfindungsgemäßen Trommelbelags.

Fig. 3    zeigt eine schematische Aufsicht auf eine Antriebstrommel gemäß einem Ausführungsbeispiel der Erfindung.

Fig. 4    zeigt eine schematische Aufsicht auf einen Trommelbelag gemäß einem Ausführungsbeispiel der Erfindung.

Fig. 5    zeigt eine schematische Aufsicht auf einen Trommelbelag gemäß einem anderen Ausführungsbeispiel der Erfindung.

Fig. 6    zeigt einen Teil des Trommelbelags gemäß Fig. 4 in einer schematischen Aufsicht.

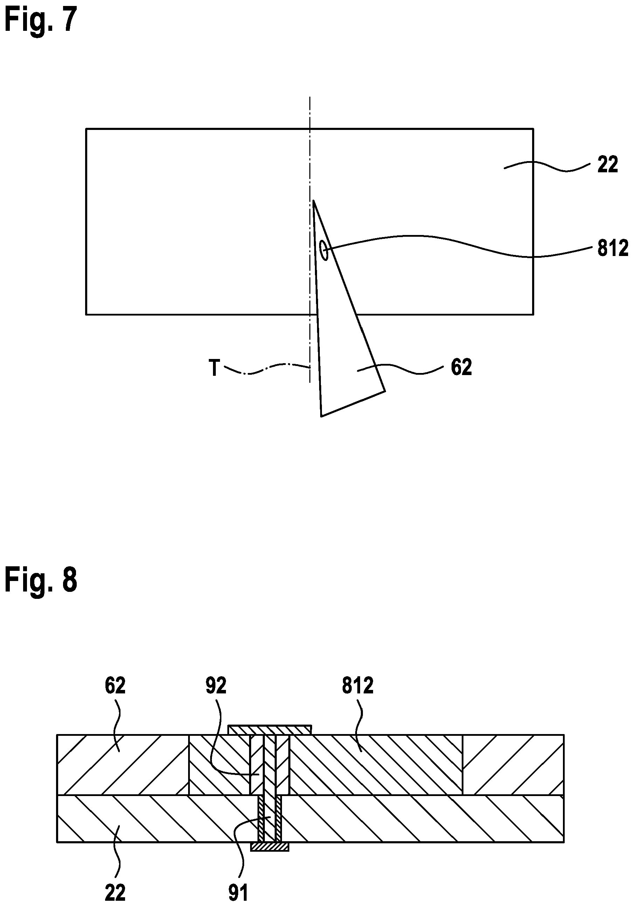

Fig. 7    zeigt schematisch die Anordnung eines rechtwinklig dreieckigen Bereichs eines Trommelbelags gemäß einem Ausführungsbeispiel der Erfindung auf eine Antriebstrommel.

Fig. 8    zeigt in einer schematischen Schnittansicht die Befestigung des rechtwinklig dreieckigen Bereichs des Trommelbelags gemäß Fig. 6 auf eine Antriebstrommeloberfläche.

Fig. 9    zeigt wie ein Teil eines Trommelbelags gemäß einem Ausführungsbeispiel der Erfindung auf eine Antriebstrommel gewickelt wird.

Fig. 10    zeigt ein weiter fortgeschrittenes Aufwickeln des Trommelbelagsteils aus Fig. 8.

Fig. 11    zeigt wie ein Teil eines Trommelbelags am Ende einer Antriebstrommel abgeschnitten und befestigt wird.

Fig. 12    zeigt einen Ausschnitt aus der Wellpappenmaschine gemäß Fig. 1.

Ausführungsbeispiele der Erfindung

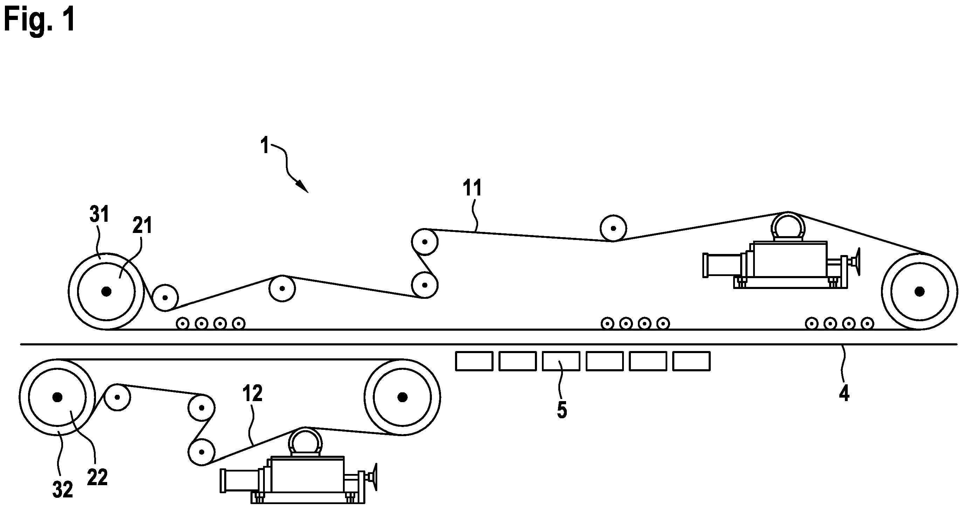

Die wichtigsten Komponenten einer Wellpappenmaschine 1 gemäß einem Ausführungsbeispiel der Erfindung sind in Fig. 1 dargestellt. Ein Obergurt 11 wird von einer ersten Antriebstrommel 21 angetrieben, die mit einem ersten Trommelbelag 31 belegt ist. Ein Untergurt 12 wird von einer zweiten Antriebstrommel 22 angetrieben, die mit einem zweiten Trommelbelag 32 belegt ist. Zwischen dem Obergurt 11 und dem Untergurt 12 wird mehrlagige Wellpappe 4 über Heizplatten 5 transportiert und die Lagen so miteinander verklebt. Bei den beiden Antriebstrommeln 21, 22 handelt es sich um herkömmliche Stahltrommeln mit einem Durchmesser von 90 cm und einer Länge von 280 cm. Die Trommellänge bestimmt die maximale Breite der in der Wellpappenmaschine 1 transportierbaren Wellpappenbahn 4.

Die Trommelbeläge 31, 32 bestehen jeweils aus einem gewebten Material, das auf beiden Seiten mit einem Beschichtungsmaterial beschichtet ist. Das Gewebe weist drei Gewebelagen auf. Die Dicke des Gewebes beträgt 5,5 mm. Auf einer Seite des Gewebes befindet sich eine 0,8 mm dicke Beschichtung aus einem Gemisch zweier Polydimethylsiloxane mit funktionellen Gruppen und Hilfsstoffen für die Additionsvernetzung (Elastosil LR 7665 A / B der Firma Wacker Chemie, Burghausen, Deutschland). Auf der gegenüberliegenden Seite des Gewebes befindet sich eine 1,0 mm dicke Beschichtung aus Polydimethylsiloxan mit Füllstoff und Hilfsstoff und Triacetoxyethylsilan-Vernetzer (Elastosil E43 N der Firma Wacker Chemie). Der Shorehärtegrad A des Trommelbelags beträgt 54.

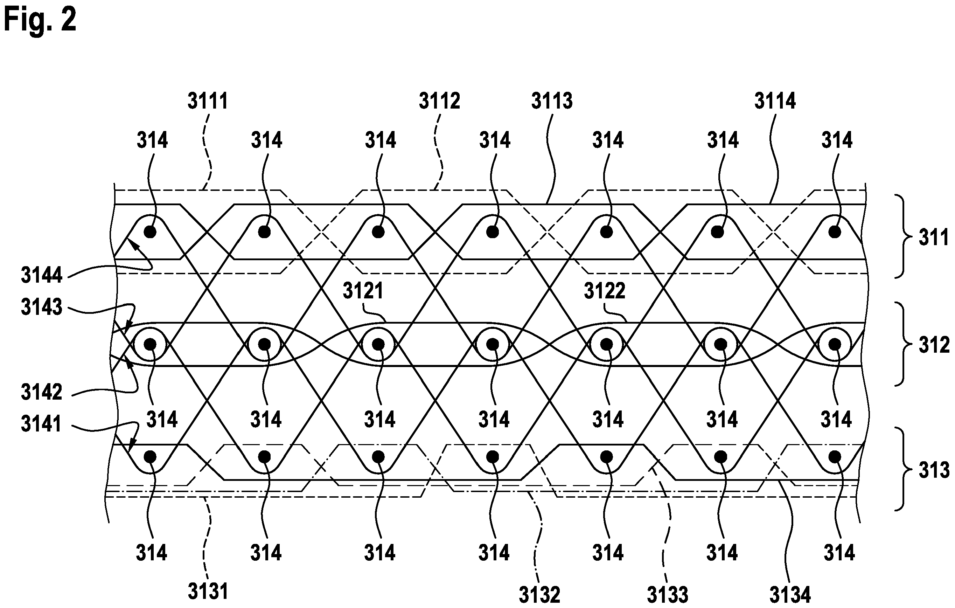

Das Gewebe des ersten Trommelbelags 31 ist in Fig. 2 dargestellt. In den Gewebelagen 311, 312, 313 verlaufen die Schussfäden 314, welche aus Polyester bestehen, quer zur Längsrichtung des Gewebes. In der oberen Gewebelage 311 sind vier gegeneinander versetzt verlaufende Kettfäden 3111, 3112, 3113, 3114 aus einer Polyester/Viskose-Mischung vorgesehen, die sowohl nach innen zur mittleren Gewebelage 312 hin als auch nach außen hin über jeweils mindestens zwei Schussfäden 314 laufen. Die mittlere Gewebelage 312 weist zwei zueinander versetzt verlaufende Kettfäden 3121, 3122 aus Polyester auf, die über jeweils zwei Schussfäden 314 laufen. Die untere Gewebelage 313 besteht aus vier jeweils versetzt zueinander laufenden Kettfäden 3131, 3132, 3133, 3134 aus der Polyester/Viskose-Mischung, die nach innen - zur mittleren Gewebelage 312 - über nur einen Schussfaden 314 und nach außen über zumindest drei Schussfäden 314 laufen. Die drei Gewebelagen 311, 312, 313 sind über Bindefäden 3141, 3142, 3143, 3144 aus der PolyesterNiskose-Mischung miteinander verwebt. Die Bindefäden sind in jeweils zwei Fadengruppen unterteilt, wobei die eine Fadengruppe bildenden Bindefäden 3143, 3144 zueinander versetzt laufen und die obere Gewebelage 311 an die mittlere Gewebelage 312 binden. Die Bindefäden 3143 und 3144 sind jeweils abwechselnd um einen Schussfaden 314 in der oberen Gewebelage 311 und einen Schussfaden 314 in der mittleren Gewebelage 312 geführt. In entsprechender Weise bindet die aus den Bindefäden 3141 und 3142 bildende Fadengruppe die untere Gewebelage 313 an die mittlere Gewebelage 312.

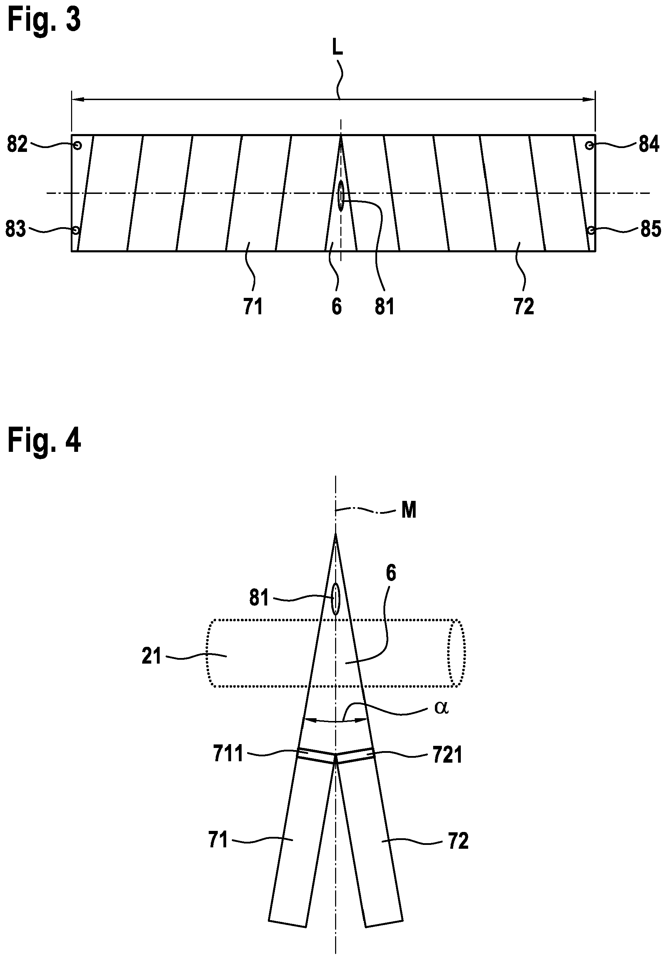

In Fig. 3 ist dargestellt, wie der erste Trommelbelag 31 auf die erste Antriebstrommel 21 aufgebracht ist. Dabei ist die mit Elastosil LR 7665 A / B beschichtete Seite des ersten Trommelbelages 31 der Oberfläche der ersten Antriebstrommel 21 zugewandt. Der erste Trommelbelag 31 weist einen konvex deltoidförmigen Bereich 6 auf, der aufgrund der Kreiszylinderform der ersten Antriebstrommel 21 in Fig. 3 nur teilweise erkennbar ist. An die beiden Schmalseiten dieses konvex deltoidförmigen Bereichs 6 schließen sich mit ihren jeweiligen Schmalseiten zwei rechteckige Bereiche 71, 72 des Trommelbelags 31 an, welche von der Mitte der ersten Antriebstrommel 21 aus symmetrisch zu deren beiden Enden gewickelt sind, so dass dort, wo die Längsseiten der rechteckigen Bereiche sich jeweils berühren, umlaufende Rillen auf der ersten Antriebstrommel 21 entstehen. Die Enden der rechteckigen Bereiche 71, 72 sind bündig mit dem Ende der ersten Antriebstrommel 21 abgeschnitten. In der Mitte des konvex deltoidförmigen Bereichs 6 ist ein Langloch 81 angeordnet und kreisförmige Löcher 82, 83, 84, 85 sind durch die Enden der rechteckigen Bereiche 71 , 72 des Trommelbelags 71 gebohrt. Nicht dargestellte Fixierniete fixieren den ersten Trommelbelag 31 durch das Langloch 81 und durch die kreisförmigen Löcher 82, 83, 84, 85 auf der Oberfläche der ersten Antriebstrommel 21.

In Tabelle 1 ist dargestellt, welche Fläche A die erste Antriebstrommel 21 bei einer Länge L von 280 cm und einem Durchmesser d von 90 cm aufweist. Hieraus ergibt sich eine minimale Länge x der rechteckigen Bereiche 71, 72, um die Fläche A vollständig abzudecken. Weiterhin ist für alternative geringere Trommeldurchmesser von 80 cm, 70 cm, 60 cm und 30 cm für Antriebstrommeln, welche gegen die erste Antriebstrommel 21 ausgetauscht werden könnten, dargestellt, wie sich die Trommeloberfläche A und damit auch die minimal benötige Länge der rechteckigen Bereiche 71, 72 verringert. Im vorliegenden Ausführungsbeispiel werden die beiden Trommelbeläge 31, 32 allerdings mit Längen x der rechteckigen Bereiche 71, 72 ausgeliefert, welche deutlich über der Minimallänge von 26,39 m für einen Trommeldurchmesser von 90 cm liegen, so dass der Trommelbelag durch Zurechtschneiden der rechteckigen Bereiche 71, 72 für jeden diesen Trommeldurchmesser d verwendet werden kann.

Tabelle 1

| d | L | A | X |
|---|---|---|---|
| [cm] | [cm] | [m$^2$] | [m] |
| 90 | 280 | 3,958 | 26,39 |
| 80 | 280 | 3,519 | 23,46 |
| 70 | 280 | 3,079 | 20,53 |
| 60 | 280 | 2,639 | 17,59 |
| 30 | 280 | 1,319 | 8,79 |

Fig. 4 zeigt eine Ansicht des ersten Trommelbelags 31, welcher noch nicht auf die erste Antriebstrommel 21 aufgewickelt ist. Hierin ist der konvex deltoidförmige Bereich 6 vollständig dargestellt. Die rechteckigen Bereiche 71, 72 sind jeweils nur verkürzt dargestellt. Diese rechteckigen Bereiche 71, 72 sind mittels Klammern 711, 721 an dem konvex deltoidförmigen Bereich 6 befestigt. Diese Befestigung erfolgt an den beiden kürzeren Seiten des konvex deltoidförmigen Bereichs 6. Seine beide längeren Seiten bilden einen Winkel $\alpha$, weicher die Steigung bestimmt, mit welcher die rechteckigen Bereiche 71, 72 ihre Spiralen um die erste Antriebstrommel 21 herum bilden. Der Winkel $\alpha$ wird durch die Mittelachse M des konvex deltoidförmigen Bereichs 6 halbiert. Gemäß Formel 1 ergibt sich in Abhängigkeit vom Umfang U der ersten Antriebstrommel 21 jeweils ein optimaler Winkel $\alpha$. Der Umfang U kann dabei aus dem Durchmesser d der ersten Antriebstrommel 21 berechnet werden. Die Winkel $\alpha$ für die in Tabelle 1 genannten Trommeldurchmesser sind in Tabelle 2 tabelliert. Dabei beträgt die Breite b der rechteckigen Bereiche 15 cm.

Tabelle 2

| d | U | $\alpha$ |
|---|---|---|
| [cm] | [cm] | [°] |
| 90 | 282,7 | 3,0 |
| 80 | 251,3 | 3,4 |
| 70 | 219,9 | 3,9 |

(fortgesetzt)

| d | U | α |
|---|---|---|
| [cm] | [cm] | [°] |
| 60 | 188,5 | 4,6 |
| 30 | 94,2 | 9,1 |

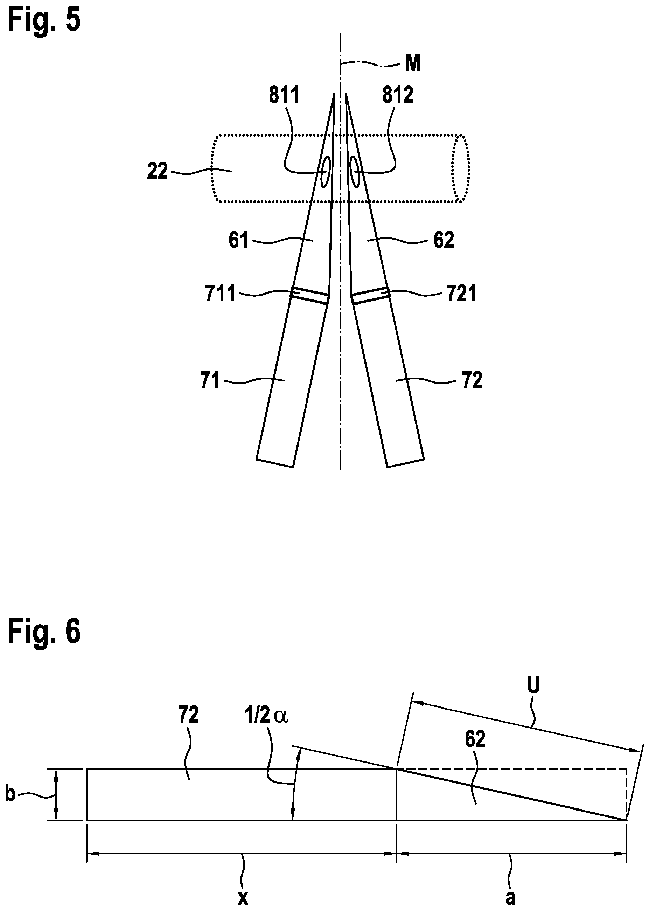

Fig. 5 zeigt eine Darstellung des zweiten Trommelbelags 32 in analoger Darstellung zur Fig. 4. Allerdings ist der konvex deltoidförmige Bereich hier nicht einstückig ausgebildet. Vielmehr besteht er aus zwei rechtwinklig dreieckigen Belagsstücken 61, 62. Diese können Teil eines Sets sein, um den zweiten Trommelbelag 32 am Standort der Wellpappenmaschine 1 zusammenzusetzen. Jedes der rechtwinklig dreieckigen Belagsstücke 61, 62 weist jeweils ein Langloch 811, 812 auf, um es separat an der Oberfläche der zweiten Antriebstrommel 22 befestigen zu können. Auch wenn die beiden rechtwinklig dreieckigen Belagsstücke 61, 62 zur besseren Veranschaulichung beabstandet dargestellt sind, so werden sie bei ihrer Anordnung auf der zweiten Antriebstrommel 22 doch entlang ihren Hypotenusen so aneinandergefügt, dass sie das in Fig. 4 dargestellte konvexe Deltoid bilden. Ihre Hypotenusen liegen dann also jeweils auf der Mittelachse M des konvexen Deltoids. Wie der Darstellung in Fig. 6 zu entnehmen ist, entspricht die Hypotenusenlänge dem Umfang U der zweiten Antriebstrommel 22. Der Winkel, welcher von der Hypotenuse und der längeren Kathete a des rechtwinklig dreieckigen Bereichs 62 aufgespannt wird, entspricht der Hälfte des Winkels α.

Zum Anordnen des zweiten Trommelbelags 32 auf der zweiten Antriebstrommel 22 wird zunächst eines der rechtwinklig dreieckigen Belagsstücke 62 so auf der Antriebstrommeloberfläche angeordnet, dass seine Hypotenuse auf der Umfangsmittelachse T der zweiten Antriebstrommel 22 liegt. Es wird ein Loch in die Antriebstrommeloberfläche gebohrt, durch welches ein Fixierniet 91 geführt wird, welcher das rechtwinklig dreieckige Belagsstück 62 durch das Langloch 812 hindurch mit der Antriebstrommeloberfläche verbindet. Dabei ist in dem Langloch 812 eine Abstandshülse 92 so zwischen dem Kopf des Fixierniets 91 und der Antriebströmmeloberfläche um den Fixierniet herum angeordnet, dass dieser im Langloch 812 beweglich ist. Dies ist in Fig. 6 dargestellt.

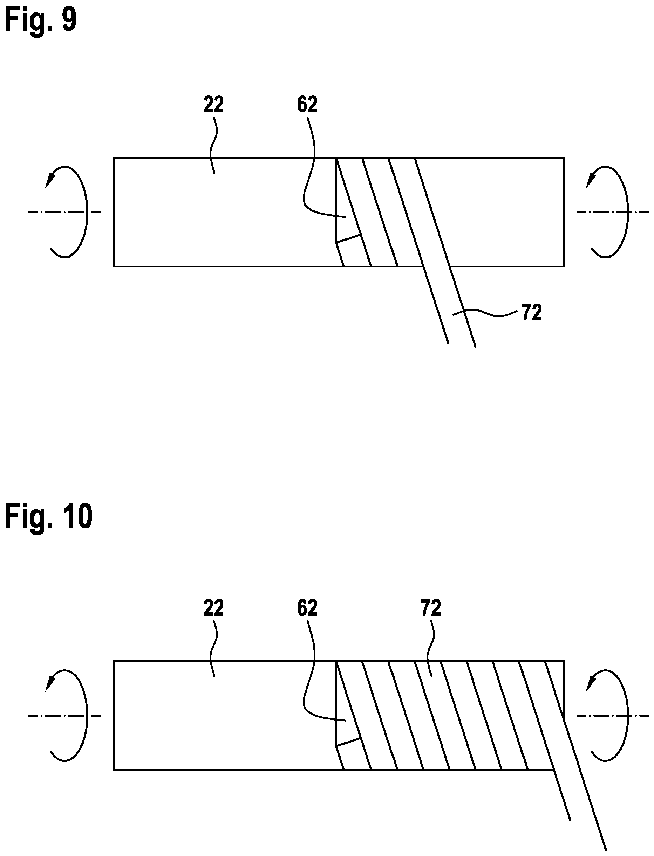

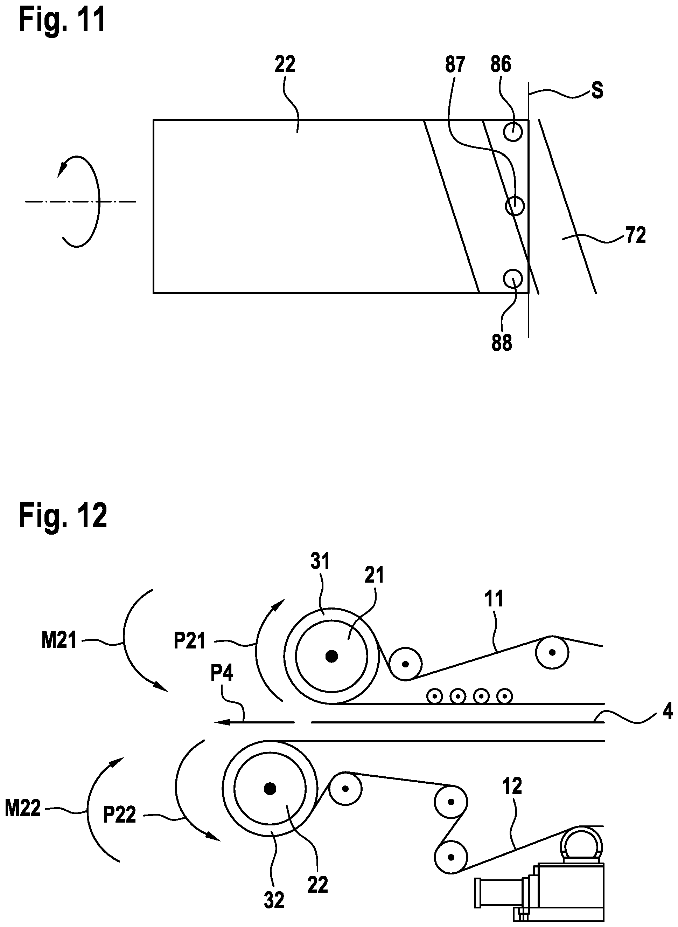

Nachdem der zu diesem rechtwinklig dreieckigen Belagsstück 62 gehörende rechteckige Bereich 72 des Trommelbelags 32 an diesem angeklammert wurde, kann der rechteckige Bereich 72 in einem durch den Winkel α vorgegebenen Winkel um die zweite Antriebstrommel 22 herumgewickelt werden. Hierzu wird die zweite Antriebstrommel 22 in der Wellpappenmaschine 1 entgegen der Drehrichtung der zweiten Antriebstrommel 22 bei der Wellpappenproduktion gedreht. Das Aufwickeln des rechteckigen Bereichs 72 ist in den Fig. 9 und 10 dargestellt. Sobald beim Umwickeln der zweiten Antriebstrommel 22 deren Ende erreicht wurde, wird der überstehende Rest des rechteckigen Bereichs 72, wie in Fig. 11 dargestellt ist, entlang einer Schnittkante S abgeschnitten. Anschließend werden um den Antriebstrommelumfang herum mehrere kreisförmige Löcher 86, 87, 88 durch den rechteckigen Bereich 72 und durch die Antriebstrommeloberfläche hindurch gebohrt. Durch diese kreisförmigen Löcher 86, 87, 88 werden weitere als Blindkopfnieten ausgeführte Fixierniete geführt, weiche den rechteckigen Bereich 72 auf der Antriebstrommeloberfläche fixieren. Anschließend wird dieser Vorgang mit einem weiteren rechtwinklig dreieckigen Belagsstück 61 und einem weiteren rechteckigen Belagsstück 71 für die andere Hälfte der zweiten Antriebstrommel 22 wiederholt, bis diese vollständig mit dem zweiten Trommelbelag 32 belegt ist. Dabei bilden die beiden rechtwinklig dreieckigen Belagsstücke 61, 62 einen konvex deltoidförmigen Bereich in der Mitte der zweiten Antriebstrommel 22.

In Fig. 12 ist dargestellt, in welche Montagerichtungen M21, M22 die erste Antriebstrommel 21 und die zweite Antriebstrommel 22 beim Aufbringen der Trommelbeläge 31, 32 gedreht werden. Bei der späteren Produktion von Wellpappe wird die Wellpappe 4 in die Produktionsrichtung P4 bewegt, indem die Antriebstrommeln 21, 22 in den Montagerichtungen M21, M22 entgegengesetzte Produktionsrichtungen P21, P22 gedreht werden. Dabei erhitzen sich die Trommelbeläge 31, 32 ausgehend von einer Raumtemperatur von 20°C um 80°C bis 140°C, so dass Betriebstemperaturen im Bereich von 100°C bis 160°C erreicht werden. An einem 6 cm breiten Stück eines der Trommelbeläge 31, 32 wurde über eine Messstrecke von 20 cm mit einer Vorspannkraft von 50 N bei Raumtemperatur simuliert, weichen Einfluss diese Temperaturerhöhung auf die Spannkraft F der Trommelbeläge 31, 32 hat. In Tabelle 3 ist für unterschiedliche Temperaturen T neben dieser Spannkraft F tabelliert, um weiche Strecke s sich die Probe bei der jeweiligen Temperatur verkürzt und welcher prozentualen Längenverringerung Δl dies entspricht. Alle tabellierten thermischen Schrumpfungen waren vollständig reversibel.

Tabelle 3

| T | F | s | Δl |
|---|---|---|---|
| [°C] | [kg] | [mm] | [%] |
| 100 | 5,0 | 0,10 | 0,02 |

(fortgesetzt)

| T | F | s | Δl |
|---|---|---|---|
| [°C] | [kg] | [mm] | [%] |
| 120 | 5,0 | 0,25 | 0,06 |
| 135 | 5,2 | 0,50 | 0,12 |
| 145 | 5,5 | 1,00 | 0,24 |
| 160 | 6,0 | 2,00 | 0,49 |

Wenn die Trommelbeläge 31, 32 verschleißbedingt wieder von den Antriebstrommeln 21, 22 entfernt werden müssen, so kann dies in einfacher Weise erreicht werden, indem nach Abkühlen der Antriebstrommeln 21, 22 und Entfernen des Obergurts 11 und des Untergurts 12 von den Antriebstrommeln 21, 22 alle Fixierniete gelöst werden und die Trommelbeläge 31, 32 von den Antriebstrommeln 21, 22 abgewickelt werden. Anschließend ist ein sofortiges Neubelegen mit frischen Trommelbelägen 31, 32 möglich.

**Patentansprüche**

1. Trommelbelag (31, 32) für eine Antriebstrommel (21, 22) in einer Wellpappenmaschine (1), aufweisend ein bei Erwärmung reversibel schrumpfendes textiles Trägermaterial, das auf wenigstens einer Seite mit einem Beschichtungsmaterial beschichtet ist, wobei der Trommelbelag (31, 32) zwei rechteckige Bereiche (71, 72) aufweist, die jeweils an einer Schmalseite mit einem konvex deltoidförmigen Bereich (6) verbunden sind.

2. Trommelbelag (31, 32) nach Anspruch 1, **dadurch gekennzeichnet, dass** das textiles Trägermaterial auf beiden Seiten mit dem Beschichtungsmaterial beschichtet ist.

3. Trommelbelag (31, 32) nach Anspruch 1 oder 2, **dadurch gekennzeichnet, dass** das reversibel schrumpfende textile Trägermaterial bei einer Erwärmung um mindestens 80°C in Längsrichtung um mindestens 0,01 % schrumpft.

4. Trommelbelag (31, 32) nach einem der Ansprüche 1 bis 3, **dadurch gekennzeichnet, dass** das reversibel schrumpfende textile Trägermaterial Polyester und/oder Viskose enthält.

5. Trommelbelag (31 , 32) nach einem der Ansprüche 1 bis 4, **dadurch gekennzeichnet, dass** das Beschichtungsmaterial bei Erwärmung reversibel schrumpft.

6. Trommelbelag (31, 32) nach einem der Ansprüche 1 bis 5, **dadurch gekennzeichnet, dass** das Beschichtungsmaterial ausgewählt ist aus der Gruppe, bestehend aus Kautschuken, Silikonen, Polyurethanen und Gemischen daraus.

7. Trommelbelag (31, 32) nach einem der Ansprüche 1 bis 6, **dadurch gekennzeichnet, dass** er einen Shorehärtegrad A von mehr als 50 aufweist.

8. Set zur Herstellung eines Trommelbelags (31, 32) nach einem der Ansprüche 1 bis 7, umfassend zwei rechteckige Belagsstücke (71, 72) und ein konvex deltoidförmiges Belagsstück (6), wobei alle Belagsstücke (6, 71, 72) ein bei Erwärmung reversibel schrumpfendes textiles Trägermaterial aufweisen, das auf wenigstens einer Seite mit einem Beschichtungsmaterial beschichtet ist.

9. Set zur Herstellung eines Trommelbelags (31, 32) nach einem der Ansprüche 1 bis 7, umfassend zwei rechteckige Belagsstücke (71, 72) und mehrere dreieckige Belagsstücke (61, 62), welche eingerichtet sind, um zu dem konvex deltoidförmiges Bereich (6) des Trommelbelags (31, 32) zusammengefügt zu werden, wobei alle Belagsstücke (61, 62, 71, 72) ein bei Erwärmung reversibel schrumpfendes textiles Trägermaterial aufweisen, das auf wenigstens einer Seite mit einem Beschichtungsmaterial beschichtet ist.

10. Antriebstrommel (21, 22) für eine Wellpappenmaschine (1) aufweisend einen Trommelbelag (31, 32), aufweisend ein bei Erwärmung reversibel schrumpfendes textiles Trägermaterial, das auf wenigstens einer Seite mit einem Beschichtungsmaterial beschichtet ist, wobei zwei rechteckige Bereiche (71, 72) des Trommelbelags (31, 32) spiralförmig um die Antriebstrommel (21, 22) gewickelt sind und mit Befestigungselementen (91) an der Antriebstrommeloberfläche befestigt sind, so dass jeweils ein Ende jedes rechteckigen Bereichs (71, 72) des Trommelbelags an eine Seite eines in der Mitte der Antriebstrommeloberfläche angeordneten konvex deltoidförmigen Positionierbereichs der Antriebstrommel angrenzt.

11. Antriebstrommel (21, 22) nach Anspruch 10, **dadurch gekennzeichnet, dass** der Trommelbelag (31, 32) ein Trommelbelag nach einem der Ansprüche 1 bis 9 ist, wobei der konvex deltoidförmigen Bereich (6) des Trommelbelags (31, 32) in dem Positionierbereich mittels mindestens eines Befestigungselements (91) an der Antriebstrommel (21, 22) befestigt ist und die rechteckigen Bereiche (71, 72) des Trommelbelags (31, 32) an ihren Enden jeweils mit mindestens einem weiteren Befestigungselement (91) an der Antriebstrommeloberfläche befestigt sind.

12. Antriebstrommel (21, 22) nach Anspruch 11, **dadurch gekennzeichnet, dass** ein von den beiden längsten Seiten des konvex deltoidförmigen Bereichs (6) des Trommelbelags (31, 32) eingeschlossener Winkel α sich gemäß der folgenden Formel ergibt

$$\alpha = 2 \cdot \arcsin \frac{b}{U}$$

wobei b die Breite der rechteckigen Bereiche des Trommelbelags (31, 32) ist und U der Umfang der Antriebstrommel (21, 22) ist.

13. Antriebstrommel (21, 22) nach Anspruch 11 oder 12, **dadurch gekennzeichnet, dass** der Trommelbelag (31, 32) mit einer Vorspannkraft im Bereich von 10 N bis 100 N vorgespannt ist.

14. Antriebstrommel (21, 22) nach einem der Ansprüche 11 bis 13, **dadurch gekennzeichnet, dass** das mindestens eine Befestigungselement (9), welches den konvex deltoidförmigen Bereich (6) des Trommelbelags (31, 32) an der Antriebstrommel (21, 22) befestigt, ein Fixierniet ist, der in einem durch den konvex deltoidförmigen Bereich (6) hindurchgehenden Langloch (8) angeordnet ist.

15. Verfahren zur Herstellung einer Antriebstrommel (21, 22) nach einem der Ansprüche 11 bis 13, umfassend die folgenden Schritte:

- Anordnen des konvex deltoidförmigen Bereichs (6) eines Trommelbelags (31, 32) nach einem der Ansprüche 1 bis 9 an einer Antriebstrommel (21, 22), wobei die Mittelachse (M) des konvex deltoidförmigen Bereichs (6) entlang der Umfangsmittefachse (T) der Antriebstrommel (21, 22) angeordnet wird,
- Befestigen des konvex deltoidförmigen Bereichs (6) des Trommelbelags (31, 32) an der Antriebstrommeloberfläche mittels mindestens eines Befestigungselements (9),
- Drehen der Antriebstrommel (21, 22), wobei die rechteckigen Bereiche (71, 72) des Trommelbelags (31, 32) spiralförmig um die Antriebstrommel (21, 22) gewickelt werden,
- Abschneiden der rechteckigen Bereiche (71, 72) an den Enden der Antriebstrommel (21, 22), und
- Befestigen der Enden der rechteckigen Bereiche (71, 72) an der Antriebstrommeloberfläche mittels weiterer Befestigungselemente (9).

16. Verfahren nach Anspruch 15, **dadurch gekennzeichnet, dass** der konvex deltoidförmigen Bereich (6) aus zwei rechtwinklig dreieckigen Bereichen (61, 62) zusammengesetzt wird, wobei jeder rechtwinklig dreieckige Bereich (61, 62) mit mindestens einem Befestigungselement (9) an der Antriebstrommeloberfläche befestigt wird.

17. Verfahren nach Anspruch 15 oder 16, **dadurch gekennzeichnet, dass** die rechteckigen Bereiche (71, 72) mittels Verbindungselementen (9) an dem konvex deltoidförmigen Bereich (6) befestigt werden.

18. Wellpappenmaschine (1), aufweisend mindestens eine Antriebstrommel (21, 22) nach einem der Ansprüche 10 bis 14, wobei die rechteckigen Bereiche (71, 72) des Trommelbelags (31, 32) entgegen der Drehrichtung der Antriebstrommel (21, 22) im Betrieb der Wellpappenmaschine (1) um die Antriebstrommel gewickelt sind.

**Claims**

1.  Drum covering (31, 32) for a drive drum (21, 22) in a corrugating machine (1), having a textile carrier material that reversibly shrinks when heated up, said carrier material being coated on at least one side with a coating material, wherein the drum covering (31, 32) has two rectangular regions (71, 72) that are each connected to a convexly deltoid-shaped region (6) on a narrow side.

2.  Drum covering (31, 32) according to claim 1, **characterised in that** the textile carrier material is coated on both sides with the coating material.

3.  Drum covering (31, 32) according to claim 1 or 2, **characterised in that** the reversibly shrinking textile carrier material shrinks when heated up by at least 80°C by a least 0.01% in the longitudinal direction.

4.  Drum covering (31, 32) according to one of claims 1 to 3, **characterised in that** the reversibly shrinking textile carrier material contains polyester and/or viscose.

5.  Drum covering (31, 32) according to one of claims 1 to 4, **characterised in that** the coating material reversibly shrinks when heated up.

6.  Drum covering (31, 32) according to one of claims 1 to 5, **characterised in that** the coating material is selected from the group consisting of rubbers, silicones, polyurethanes and mixtures of these.

7.  Drum covering (31, 32) according to one of claims 1 to 6, **characterised in that** it has a Shore A hardness of more than 50.

8.  Set for producing a drum covering (31, 32) according to one of claims 1 to 7, comprising two rectangular covering pieces (71, 72) and a convexly deltoid-shaped covering piece (6), wherein all covering pieces (6, 71, 72) have a textile carrier material that reversibly shrinks when heated up, said carrier material being coated on at least one side with a coating material.

9.  Set for producing a drum covering (31, 32) according to one of claims 1 to 7, comprising two rectangular covering pieces (71, 72) and several triangular covering pieces (61, 62) that are designed to be joined to the convexly deltoid-shaped region (6) of the drum covering (31, 32), wherein all covering pieces (61, 62, 71, 72) have a textile carrier material that reversibly shrinks when heated up, said carrier material being coated on at least one side with a coating material.

10. Drive drum (21, 22) for a corrugating machine (1) having a drum covering (31, 32), having a textile carrier material that reversibly shrinks when heated up, said carrier material being coated on at least one side with a coating material, wherein two rectangular regions (71, 72) of the drum covering (31, 32) are wound around the drive drum (21, 22) in spiral-shaped manner and are fixed on the drive drum surface by fixing elements (91), such that in each case an end of each rectangular region (71, 72) of the drum covering borders a side of a convexly deltoid-shaped positioning region of the drive drum arranged in the middle of the drive drum surface.

11. Drive drum (21, 22) according to claim 10, **characterised in that** the drum covering (31, 32) is a drum covering according to one of claims 1 to 9, wherein the convexly deltoid-shaped region (6) of the drum covering (31, 32) is fixed in the positioning region by means of at least one fixing element (91) on the drive drum (21, 22) and the rectangular regions (71, 72) of the drum drive (31, 32) are fixed on their ends in each case by at least one further fixing element (91) on the drive drum surface.

12. Drive drum (21, 22) according to claim 11, **characterised in that** an angle $\alpha$ formed by the two longest sides of the convexly deltoid-shaped region (6) of the drum covering (31, 32) emerges from the following formula

$$\alpha = 2 \cdot \arcsin \frac{b}{U}$$

wherein b is the width of the rectangular regions of the drum covering (31, 32) and U is the circumference of the drive drum (21, 22).

**EP 3 475 074 B1**

**13.** Drive drum (21, 22) according to claim 11 or 12, **characterised in that** the drum covering (31, 32) is pre-tensioned by a pre-tensioning force ranging from 10 N to 100 N.

**14.** Drive drum (21, 22) according to one of claims 11 to 13, **characterised in that** the at least one fixing element (9) which fixes the convexly deltoid-shaped region (6) of the drum covering (31, 32) on the drive drum (21, 22) is a fixing rivet that is arranged in an elongated hole (8) passing through the convexly deltoid-shaped region (6).

**15.** Method for producing a drive drum (21, 22) according to one of claims 11 to 13, comprising the following steps:

- arranging the convexly deltoid-shaped region (6) of a drum covering (31, 32) according to one of claims 1 to 9 on a drive drum (21, 22), wherein the central axis (M) of the convexly deltoid-shaped region (6) is arranged along the circumferential central axis (T) of the drive drum (21, 22),
- fixing the convexly deltoid-shaped region (6) of the drum covering (31, 32) on the drive drum surface by means of at least one fixing element (9),
- rotating the drive drum (21, 22), wherein the rectangular regions (71, 72) of the drum covering (31, 32) are wound around the drive drum (21, 22) in a spiral-shaped manner,
- cutting the rectangular regions (71, 72) on the ends of the drive drum (21, 22), and
- fixing the ends of the rectangular regions (71, 72) on the drive drum surface by means of further fixing elements (9).

**16.** Method according to claim 15, **characterised in that** the convexly deltoid-shaped region (6) is made up of two right-angled triangular regions (61, 62), wherein each right-angled triangular region (61, 62) is fixed on the drive drum surface by at least one fixing element (9).

**17.** Method according to claim 15 or 16, **characterised in that** the rectangular regions (71, 72) are fixed by means of connecting elements (9) on the convexly deltoid-shaped region (6).

**18.** Corrugating machine (1), having at least one drive drum (21, 22) according to one of claims 10 to 14, wherein the rectangular regions (71, 72) of the drum covering (31, 32) are wound around the drive drum against the rotational direction of the drive drum (21, 22) when the corrugating machine (1) is in operation

**Revendications**

**1.** Revêtement de tambour (31, 32) destinée à un tambour d'entraînement (21, 22) de machine à la fabrication le carton ondulé (1), comprenant_un matériau de support textile se contractant de manière réversible par chauffage, lequel matériau de support est revêtu d'un matériau de revêtement sur au moins une face, ledit revêtement de tambour (31, 32) présentant deux zones rectangulaires (71, 72), chacune reliée par un chant à une zone de forme deltoïde convexe (6).

**2.** Revêtement de tambour (31, 32) selon la revendication 1, **caractérisée en ce que** le matériau de support textile est revêtu du matériau de revêtement sur les deux faces.

**3.** Revêtement de tambour (31, 32) selon la revendication 1 ou 2, **caractérisée en ce que** le matériau de support textile se contractant de manière réversible se contracte d'au moins 0,01 % dans le sens longitudinal sous l'effet d'un chauffage élevant sa température d'au moins 80 °C.

**4.** Revêtement de tambour (31, 32) selon l'une des revendications 1 à 3, **caractérisée en ce que** le matériau de support textile se contractant de manière réversible contient du polyester et/ou de la viscose.

**5.** Revêtement de tambour (31, 32) selon l'une des revendications 1 à 4, **caractérisée en ce que** le matériau de revêtement se contracte de manière réversible par chauffage.

**6.** Revêtement de tambour (31, 32) selon l'une des revendications 1 à 5, **caractérisée en ce que** le matériau de revêtement est choisi dans le groupe constitué des caoutchoucs, des silicones, des polyuréthanes et de leurs mélanges.

**7.** Revêtement de tambour (31, 32) selon l'une des revendications 1 à 6, **caractérisée en ce qu'**elle présente un degré de dureté Shore A de plus de 50.

8. Ensemble destiné à la fabrication d'un revêtement de tambour (31, 32) selon l'une des revendications 1 à 7, comprenant deux pièces de revêtement rectangulaires (71, 72) et une pièce de revêtement de forme deltoïde convexe (6), l'ensemble des pièces de revêtement (6, 71, 72) comprenant un matériau de support textile se contractant de manière réversible par chauffage, lequel matériau de support est revêtu d'un matériau de revêtement sur au moins une face.

9. Ensemble destiné à la fabrication d'une revêtement de tambour (31, 32) selon l'une des revendications 1 à 7, comprenant deux pièces de revêtement rectangulaires (71, 72) et plusieurs pièces de revêtement triangulaires (61, 62) qui sont agencées pour être assemblées de manière à former la zone de forme deltoïde convexe (6) du revêtement de tambour (31, 32), l'ensemble des pièces de revêtement (61, 62, 71, 72) comportant un matériau de support textile se contractant de manière réversible par chauffage, lequel matériau de support est revêtu d'un matériau de revêtement sur au moins une face.

10. Tambour d'entraînement (21, 22), destiné à une machine à la fabrication le carton ondulé (1), présentant un revêtement de tambour (31, 32) comprenant un matériau de support textile se contractant de manière réversible par chauffage, lequel matériau de support est revêtu d'un matériau de revêtement sur au moins une face ; deux zones rectangulaires (71, 72) du revêtement de tambour (31, 32) sont enroulées en spirale sur le tambour d'entraînement (21, 22) et sont fixées à la surface du tambour d'entraînement au moyen d'éléments de fixation (91), de telle façon qu'une extrémité de chacune des zones rectangulaires (71, 72) du revêtement de tambour est adjacente à un côté d'une zone de positionnement de forme deltoïde convexe du tambour d'entraînement qui est située au milieu de la surface du tambour d'entraînement.

11. Tambour d'entraînement (21, 22) selon la revendication 10, **caractérisé en ce que** le revêtement de tambour (31, 32) est un revêtement de tambour selon l'une des revendications 1 à 9, ladite zone de forme deltoïde convexe (6) du revêtement de tambour (31, 32) étant fixée au tambour d'entraînement (21, 22) dans la zone de positionnement au moyen d'au moins un élément de fixation (91) et les zones rectangulaires (71, 72) du revêtement de tambour (31, 32) étant fixées à la surface du tambour d'entraînement, à leur extrémité, par au moins un autre élément de fixation (91) respectif.

12. Tambour d'entraînement (21, 22) selon la revendication 11, **caractérisé en ce qu'**un angle α formé par les deux longs côtés de la zone de forme deltoïde convexe (6) du revêtement de tambour (31, 32) correspond à la formule suivante :

$$\alpha = 2 \cdot \arcsin \frac{b}{U}$$

dans laquelle b représente la largeur des zones rectangulaires du revêtement de tambour (31, 32) et U la circonférence du tambour d'entraînement (21, 22).

13. Tambour d'entraînement (21, 22) selon la revendication 11 ou 12, **caractérisé en ce que** le revêtement de tambour (31, 32) est prétendue avec une force de prétension située dans la plage de 10 N à 100 N.

14. Tambour d'entraînement (21, 22) selon l'une des revendications 11 à 13, **caractérisé en ce que** l'au moins un élément de fixation (9) fixant la zone de forme deltoïde convexe (6) du revêtement de tambour (31, 32) au tambour d'entraînement (21, 22) est un rivet de fixation disposé dans un trou oblong (8) traversant la zone de forme deltoïde convexe (6).

15. Procédé de fabrication d'un tambour d'entraînement (21, 22) selon l'une des revendications 11 à 13, comprenant les étapes suivantes :

- mise en place de la zone de forme deltoïde convexe (6) d'un revêtement de tambour (31, 32) selon l'une des revendications 1 à 9 sur un tambour d'entraînement (21, 22), l'axe médian (M) de la zone de forme deltoïde convexe (6) étant disposé le long de l'axe médian circonférentiel (T) du tambour d'entraînement (21, 22),
- fixation de la zone de forme deltoïde convexe (6) du revêtement de tambour (31, 32) à la surface du tambour d'entraînement au moyen d'au moins un élément de fixation (9),

- mise en rotation du tambour d'entraînement (21, 22), lesdites zones rectangulaires (71, 72) du revêtement de tambour (31, 32) s'enroulant en spirale sur le tambour d'entraînement (21, 22),
- découpe des zones rectangulaires (71, 72) aux extrémités du tambour d'entraînement (21, 22), et
- fixation de l'extrémité des zones rectangulaires (71, 72) à la surface du tambour d'entraînement au moyen d'autres éléments de fixation (9).

16. Procédé selon la revendication 15, **caractérisé en ce que** la zone de forme deltoïde convexe (6) se compose de deux zones (61, 62) en forme de triangle rectangle, chacune des zones (61, 62) en forme de triangle rectangle étant fixée à la surface du tambour d'entraînement au moyen d'au moins un élément de fixation (9).

17. Procédé selon la revendication 15 ou 16, **caractérisé en ce que** les zones rectangulaires (71, 72) sont fixées à la zone de forme deltoïde convexe (6) au moyen d'éléments de fixation (9).

18. Machine à la fabrication le carton ondulé (1), présentant au moins un tambour d'entraînement (21, 22) selon l'une des revendications 10 à 14, lesdites zones rectangulaires (71, 72) du revêtement de tambour (31, 32) étant enroulées sur le tambour d'entraînement dans le sens contraire à la rotation du tambour d'entraînement (21, 22) mise en œuvre à l'usage de la machine à la fabrication le carton ondulé (1).

**Fig. 1**

EP 3 475 074 B1

Fig. 2

## Fig. 3

## Fig. 4

## Fig. 5

## Fig. 6

## Fig. 7

## Fig. 8

# Fig. 9

22   62

72

# Fig. 10

22   62   72

# Fig. 11

22    87    86    S

72

88

# Fig. 12

31    21    11

M21    P21

P4

4

M22    P22

12

32    22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2039750 A
- AT 349984 B